Europäisches Patentamt

European Patent Office

Office européen des brevets

(11) Veröffentlichungsnummer : **0 035 974**
**B1**

# EUROPÄISCHE PATENTSCHRIFT

(45) Veröffentlichungstag der Patentschrift :
**13.07.83**

(51) Int. Cl.³ : **B 29 B   1/02**

(21) Anmeldenummer : **81810077.8**

(22) Anmeldetag : **05.03.81**

(54) **Vorrichtung zur Herstellung eines faserverstärkten Kunststoffgranulats.**

(30) Priorität : **10.03.80 CH 1859/80**

(43) Veröffentlichungstag der Anmeldung :
**16.09.81 Patentblatt 81/37**

(45) Bekanntmachung des Hinweises auf die Patenterteilung : **13.07.83 Patentblatt 83/28**

(84) Benannte Vertragsstaaten :
**AT BE CH DE FR GB IT LI NL SE**

(56) Entgegenhaltungen :
**DE A 2 557 511**
**DE A 2 816 463**
**DE B 2 029 696**
**US A 3 404 433**
**US A 3 694 131**

(73) Patentinhaber : **CIBA-GEIGY AG**
**Patentabteilung Postfach**
**CH-4002 Basel (CH)**

(72) Erfinder : **Breitenfellner, Franz, Dr.**
**Im Entich 9a**
**D-6140 Bensheim 1 (DE)**
Erfinder : **Berres, Kurt**
**Im Junkern 4**
**D-6104 Seeheim-Jugenheim 1 (DE)**

Jouve, 18, rue St-Denis, 75001 Paris, France

## Vorrichtung zur Herstellung eines faserverstärkten Kunststoffgranulats

Die Erfindung betrifft eine Vorrichtung zur Herstellung eines faserverstärkten Kunststoffgranulats gemäss Oberbegriff des Anspruchs 1.

Bei der Herstellung von glasfaserverstärktem Thermoplast-Granulat nach dem Langglasverfahren werden üblicherweise mehrere dünne Glasfaserstränge (Rovings) in einem Extrusionskopf mit thermoplastischer Schmelze getränkt und ummantelt und dabei zu einem einzigen faserverstärkten Strang vereinigt. Dieser Strang wird dann in Granulatlänge zerschnitten. Die für diese Zwecke benutzten, z. B. in der US-PS 3 694 131 beschriebenen Extrusionsköpfe sind üblicherweise mit einer konisch zusammenlaufenden Düse ausgestattet, durch welche die Rovings durchgezogen und an der Düsenspitze vereinigt werden. Die Wand der Düse ist mit Oeffnungen versehen, durch welche die thermoplastische Schmelze in das Düseninnere zugeführt wird. Bei diesen Extrusionsköpfen werden die Rovings mehr oder weniger zwanglos in die Beschichtungsdüse eingeführt. Es wurde nun festgestellt, dass selbst dann, wenn die Glasfasern in Form einer Vielzahl einzelner Rovings von je relativ geringer Faseranzahl (TEX) in den Extrusionskopf eingeführt werden, die Fasern bzw. Rovings doch zu einer Zusammenlagerung tendieren. Mit anderen Worten, die Verstärkungsfasern bzw. Rovings sind über den Querschnitt des Strangs bzw. Granulats nicht gleichmässig dispergiert, sondern zeigen ausgeprägte örtliche Ansammlungen bzw. Inhomogenitäten. Wird ein derartiges Granulat dann in üblicher Weise durch Spritzgiessen zu Formkörpern verarbeitet, so reicht die Dispergierung nicht aus, um derat angelagerte Glasbüschel trennen und verteilen zu können. Mit solchem Granulat hergestellte Formkörper weisen daher eine relativ schlechte Oberflächenqualität auf. Ausserdem kann auf diese Weise der Verstärkungseffekt der Glasfasern nicht optimal ausgenutzt werden.

Gemäss der DE-A 28 16 463 wird versucht, diesen Problemen beizukommen und eine bessere Dispergierung der Fasern zu erreichen, indem die einzelnen Rovings zunächst einmal durch ein Harztränkbad geführt und anschliessend getrocknet werden, wobei aus den Rovings ein starrer, knickempfindlicher Verbundkörper entsteht, und erst diese so vorbehandelten, starren Rovings in einem üblichen Extrudierverfahren mit Kunststoffschmelze ummantelt. Dieses Verfahren ist jedoch mehrstufig und entsprechend aufwendig.

Der Erfindung liegt die Aufgabe zugrunde, bei der Herstellung von faserverstärktem Granulat nach dem Langglasverfahren mit möglichst einfachen und betriebssicheren Mitteln eine möglichst gute Vordispergierung der Fasern im Granulat zu erreichen.

Die erfindungsgemässe Vorrichtung ist im Anspruch 1 beschrieben. Vorteilhafte Weiterbildungen ergeben sich aus den abhängigen Ansprüchen.

Durch die erfindungsgemässe Ausbildung der Vorrichtung ergibt sich eine berührungsfreie und zwangsweise Führung der Faserstränge während der Einbettung in die Kunststoffschmelze, wodurch die Vordispergierung der Fasern im Granulat erheblich verbessert wird.

Gemäss der zeichnerischen Darstellung in der US-PS 3 694 131 des weiter vorne schon beschriebenen Extrusionskopfs, von welchem die vorliegende Erfindung ausgeht, verlaufen auch bei diesem die einzelnen Fasern bzw. Faserstränge im Ummantelungsbereich berührungsfrei. Es kann jedoch leicht nachgewiesen werden, dass die Zeichnung nicht den tatsächlichen Gegebenheiten entspricht und die Faserstränge in Wirklichkeit doch in Berührung mit der Wand des zentralen Zusammenführungskanals dieses Extruderkopfs stehen. Jedenfalls offenbart diese US-Patentschrift keinerlei Führungen oder dergleichen, welche geeignet wären, die Faserstränge im Abstand von der Kanalwand zu halten.

Aus der US-PS 3 404 433 ist anderseits ein Extrusionskopf mit einem speziellen Führungsorgan bekannt, welches eine Reihe von am Umfang eines Zylinders angeordneten Führungsröhren besitzt. Die im Extrusionskopf in Kunststoff einzubettenden Fasern laufen durch diese Führungsröhren direkt in die Ummantelungszone und werden auf diese Weise im gegenseitigen Abstand gehalten. Der aus dieser US-Patentschrift bekannte Extrusionskopf dient zur Herstellung einer speziellen Art von faserverstärktem Kunststoff-Bindgarn oder auch von mehradrigen elektrischen Kabeln. Für die Herstellung von Glasfaserverstärktem Thermoplast-Granulat ist dieser Extrusionskopf weder gedacht noch geeignet. Letzteres insbesondere deshalb, weil das Einfädeln der Glasfasern in die engen Röhren des Führungsorgans kompliziert und umständlich wäre und häufige Betriebsunterbrüche zur Folge hätte.

Ein ganz ähnlicher und mit denselben Nachteilen behafteter Extrusionskopf ist ferner auch in der DE-A 25 57 511 beschrieben.

Im folgenden wird die Erfindung anhand der Zeichnung näher erläutert. Es zeigen :

Figur 1 eine schematische Gesamtdarstellung einer erfindungsgemässen Vorrichtung,

Figur 2 einen Axialschnitt durch den Extruderkopf,

Figuren 3 und 4 einen Schnitt nach den Linien III-III und IV-IV der Fig. 2 und

Figur 5 einen Querschnitt durch ein erfindungsgemäss hergestelltes GFK-Teilchen.

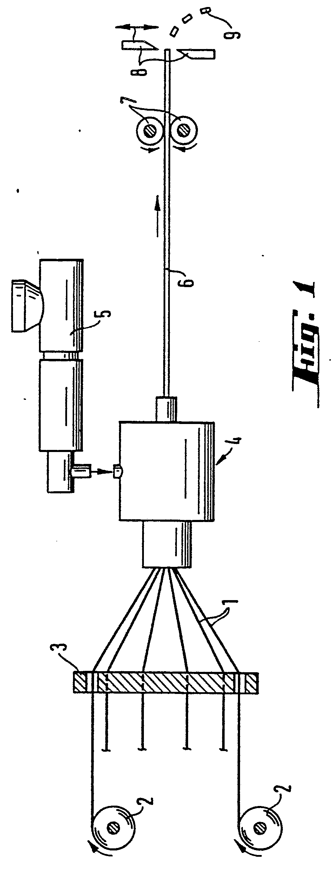

Die in Fig. 1 dargestellte Vorrichtung entspricht in ihrem Aufbau im wesentlichem dem der für das Langglasverfahren bekannten Vorrichtungen. Eine Anzahl von Glasfasersträngen 1 (Verstärkungsfasern) gelangen von Vorratsspulen 2 über eine gelochte Führungsscheibe 3 in einen Extruderkopf 4 und werden dort mit in einem Schneckenextruder 5 aufgeschmolzenem Thermoplast durchtränkt und ummantelt und dabei zu einem einzigen GFK-Strang 6 vereint. Der GFK-Strang wird von Transportwalzen 7 oder

**0 035 974**

dergleichen aus dem Extruderkopf 4 (Ummantelungseinrichtung) gezogen und einer Zerkleinerungseinrichtung 8 zugeführt, wo er in kleine Stücke 9 von rund etwa 3 bis 12 mm Länge geschnitten wird, die dann das mit Glasfasern verstärkte Kunstoffgranulat bilden.

Führungsscheibe 3, Schneckenextruder 5, Transportmittel 7 und Schneideinrichtung 8 sind völlig gleich wie beim Stand der Technik, so dass sich eine Beschreibung erübrigt.

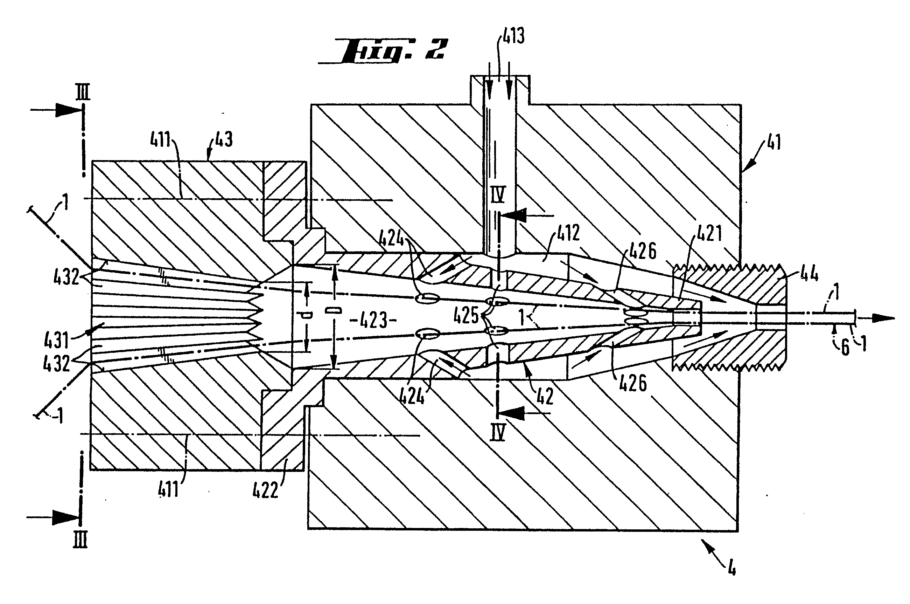

Der Extruderkopf 4 (Fig. 2) besteht im wesentlichen aus vier koaxial miteinander verschraubten Teilen, und zwar einem Grundblock 41, einem Kegeleinsatz 42, einem Führungsblock 43 und einer Matrize 44. Die Matrize 44 ist stirnseitig in den Grundblock 41 eingeschraubt. Der Kegeleinsatz 42 ist von der der Matrize 44 gegenüberliegenden Seite her in den Grundblock eingesetzt, wobei seine Spitze 421 bis ins Innere der Matrize 44 vorragt. Der Führungsblock 43 sitzt auf einem Flansch 422 des Kegeleinsatzes 42. Führungsblock, Kegeleinsatz und Grundblock sind durch in Fig. 2 nur durch Linien 411 angedeutete Schrauben zusammengehalten.

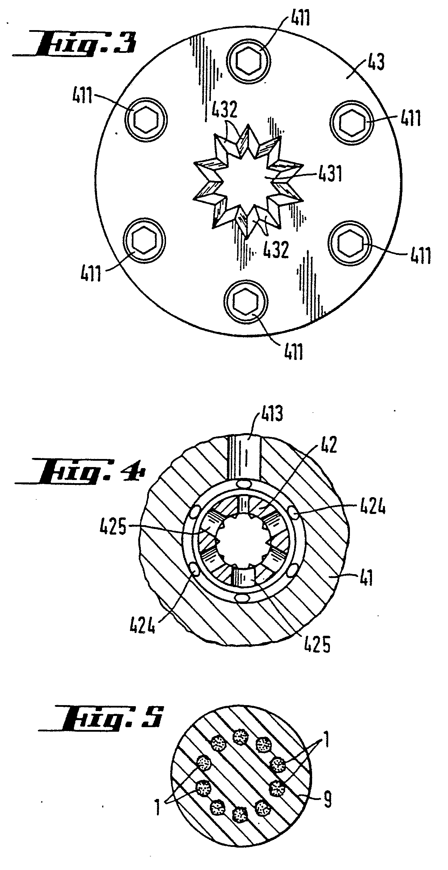

Der Kegeleinsatz 42 ist düsenförmig und bildet einen konischen Kanal 423. Die Wand des Kegeleinsatzes 42 ist im mittleren und vorderen Bereich durch drei Reihen von Bohrungen 424-426 unterbrochen, die gleichmässig längs des Umfangs des Einsatzes 42 verteilt sind (Fig. 4). Die mittleren Bohrungen 425 verlaufen radial, die vorderen und hinteren Bohrungen 426 bzw. 424 sind schräg zur Achse des Kegeleinsatzes geneigt angeordnet.

Die Bohrungen 424-426 verbinden das Innere des Kegeleinsatzes 42 mit dem diesen umgebenden ringförmigen Hohlraum 412 im Grundblock 41. In den Hohlraum 412 mündet eine radiale Bohrung 413, über welche die im Schneckenextruder 5 aufbereitete Kunststoffschmelze dem Extruderkopft 4 zugeführt wird.

Soweit entspricht also der Extruderkopf weitestgehend dem in der US-PS 3 694 131 dargestellten. Eine — allerdings grundlegende — Ausnahme bildet lediglich der im folgenden beschriebene Führungsblock.

Im Führungsblock 43 ist ein Führungskanal 431 ausgebildet, welcher sich nach Art einer Venturi-Düse von aussen nach innen zunächst verengt und dann wieder erweitert. Der sich verengende, äussere Teil des Kanals ist mit an seinem Umfang gleichmässig verteilten, längs Mantellinien verlaufenden Führungsnuten 432 versehen, der sich erweiternde Teil besitzt keine solchen Nuten. Die engste Stelle des Venturi-artigen Führungskanals 431 ist so bemessen, dass ihr Durchmesser d etwas kleiner ist als der grösste Durchmesser D des konischen Innenraums 423 des Kegeleinsatzes 42.

Im Betrieb werden die einzelnen Glasfaserstränge 1 möglichst gleichmässig auf den Umfang des Führungskanals 431 aufgeteilt und in den Nuten 432 geführt. Durch die Umlenkung der Faserstränge 1 in den Löchern der im Durchmesser grösseren Lochscheibe 3 und beim Eintritt in den Führungskanal stehen die Faserstränge unter einer geringfügigen Zugspannung. Aufgrund dieser Zugspannung und der besonderen Formgebung von Führungskanal 431 und Innenraum 423 des Kegeleinsatzes 42 sind die Faserstränge 1 im Bereich des Kegeleinsatzes 42 ohne Wandkontakt durch die Kunststoffschmelze geführt, wodurch zusammen mit der zwangsweisen Führung der Faserstränge in den Nuten eine gleichmässige Vordispergierung der Fasern bzw. Faserstränge im Granulat erreicht wird.

Die Fig. 5 zeigt einen Schnitt durch ein mit dem eben beschriebenen Extruderkopf 4 hergestelltes GFK-Teilchen 9. Wie man sieht, sind die Glasfaserstränge 1 gleichmässig dispergiert und nicht, wie bei den bisher bekannten Granulaten, irgendwo regellos im Querschnitt konzentriert.

Die Anzahl der Führungsnuten 432 im Führungsblock 43 kann zwischen 3 und etwa 50 liegen. Je mehr Nuten vorhanden sind, desto feiner werden die einzelnen Glasfaserstränge dispergiert. Mit Vorteil werden dabei möglichst viele Einzelstränge mit jeweils möglichst geringer Faseranzahl (TEX) verwendet.

Die Ausbildung des Führungsblocks 43 und des Kegeleinsatzes 42 ist nicht kritisch. Wesentlich ist vor allem, dass sich der Führungskanal 431 relativ zum Kegeleinsatz 42 in einer Weise verengt, dass die Faserstränge im Kegeleinsatz 42 ohne Wandkontrakt verlaufen. Typische Gestaltung und Dimensionierung gehen aus Fig. 2 hervor, welche ein praktisches Ausführungsbeispiel im Massstab 1 : 1 darstellt.

Von besonderer praktischer Bedeutung ist die Führung der Faserstränge in offenen Nuten, die alle zusammen in den gemeinsamen Führungskanal münden bzw. in der Wand desselben ausgebildet sind. Diese Führungsart erleichtert nämlich das erstmalige Einfädeln der Glasfaserstränge in den Extruderkopf erheblich, indem die Fasern bzw. Stränge einfach ungeordnet durch den Führungskanal und die Extrudiermatrize gesteckt werden müssen und dann einfach in die gewünschten Führungsnuten eingelegt zu werden brauchen, wo sie dann aufgrund der im Betrieb herrschenden leichten Zugspannung automatisch festhalten. Ferner besteht bei dieser Ausbildung der Faserführung die Möglichkeit kontinuierlichen Betriebs, indem, wenn ein Faserstrang zu Ende ist, einfach der nächste am Ende des vorhergehenden befestigt wird. Bei dem in der US-PS 3 404 433 beschriebenen Extruderkopf ist dies wegen der dort geschlossenen, engen Führungsröhren nicht möglich. In der Praxis hat es sich bewährt, wenn der Führungskanal an keiner Stelle eine innere lichte Weite von weniger als etwa dem Doppelten bis dem Dreifachen des Durchmessers des den Extrudierkopf verlassenden Strangs bzw. des Granulats besitzt. Anders ausgedrückt heisst das, dass dem Querschnitt des Führungskanals an jeder beliebigen Stelle stets ein Kreis mit entsprechendem Durchmesser einschreibbar sein muss.

Als Kunststoff für die Ummantelung der Glasfasern kommen vor allem Polyester, Polyamide, Polycarbonate etc in Frage.

Mit der eben beschriebenen Vorrichtung wurde ein GFK-Granulat auf der Basis von Polybutylenterephtalat (PBTP) wie folgt hergestellt :

50 Glasfaserstränge (Rovings) mit je 160 TEX wurden von Vorratsspulen abgewickelt und durch den Extruderkopf 4 gemäss Fig. 2 gezogen. Dabei wurden in jeder der zehn Führungsnuten 432 fünf Faserstränge eingelegt.

In einem 48 mm — Einschneckenextruder, der mit einer Dreizonenschnecke ausgerüstet war, wurde PBTP-Granulat mit einer Intrinsic-Viskosität von 0,85 dl/g (85,00 cm$^3$/g) bei etwa 225-260 °C plastifiziert. Die so vorbereitet Schmelze wurde dem auf 230-250 °C aufgeheizten Extruderkopf 4 zugeführt und die Glasfaserstränge damit ummantelt. Der Austrittsdurchmesser des die Matrize 44 verlassenden GFK-Strangs 6 war 4,8 mm.

Der GFK-Strang 6 wurde mit einer Geschwindigkeit von 15 m/min abgezogen und in einem Stranggranulator 8 in Granulat von 6 mm Länge geschnitten. Der Glasfasergehalt des Granulats betrug 35 Gew.%.

Das Granulat wurde getrocknet und unter den für glasfaserverstärkes PBTP üblichen Verarbeitungsbedingungen auf einer Schneckenspritzgiessmaschine zu Normprüfkörpern verarbeitet.

Unter den gleichen Bedingungen, jedoch unter Verwendung eines herkömmlichen Extruderkopfs, wurde ein Vergleichs-Granulat auf PBTP-Bais erzeugt und ebenfalls zu Normprüfkörpern verarbeitet.

An den Normprüfkörpern wurden die in der nachstehenden Tabelle angeführten Eigenschaften gemessen :

| Eigenschaft | Normprüfkörper aus erfindungsgemäss hergestelltem Granulat | Normprüfkörper aus konventionell hergestelltem Granulat |
|---|---|---|
| Zugfestigkeit N/mm$^2$ DIN 53 455 | 145 | 137 |
| Biegefestigkeit N/mm$^2$ ASTM D 790 | 245 | 235 |
| E-Modul N/mm$^2$ ASTM D 790 | 11 000 | 9 000 |
| Schlagzähigkeit KJ/m$^2$ DIN 53 453 | 44 | 40 |
| GF-Gehalt berechnet aus Dichte Gew.-% | 35 | 35 |

Wie daraus zu ersehen ist, weisen die Formkörper aus dem erfindungsgemäss hergestellten Granulat bessere mechanische Eigenschaften auf. Ausserdem ist die Oberflächenqualität bei den Formkörpern aus dem erfindungsgemäss hergestellten Granulat absolut einwandfrei, wohingegen bei den Formkörpern aus dem herkömmlichen Granulat zahlreiche Glasfaserbüschel an der Oberfläche erkennbar sind.

## Ansprüche

1. Vorrichtung zur Herstellung eines faserverstärkten Kunststoffgranulats nach dem Langglasverfahren, mit einer Ummantelungseinrichtung (4) zum Einbetten von Verstärkungsfasern (1) in eine Kunststoffschmelze und zur Vereinigung der Fasern zu einem einzigen Strang (6), wobei die Ummantelungseinrichtung (4) einen im wesentlichen hohlkegelförmigen Teil (42) aufweist, durch dessen Innenraum (423) die Verstärkungsfasern (1) während der Einbettung in die Schmelze laufen und dessen Wandung mit Zufuhröffnungen (424-426) für die Schmelze versehen ist, und mit Mitteln (8) zum Zerkleinern des kunststoffummantelten Strangs·in ein Granulat (9) sowie mit Mitteln (7) zum Zuführen des Strangs zu den Zerkleinerungsmitteln, dadurch gekennzeichnet, dass als Führungsmittel (43) für die Verstärkungsfasern (1) ein dem hohlkegelförmigen Teil (42) auf dessen weiterer Seite vorgeordneter, ein Innenprofil aufweisender koaxialer Führungskanal (431) vorgesehen ist, der so ausgebildet ist, dass jeder senkrecht zu seiner Achse geführte Querschnitt einen einzigen, zusammenhängenden in sich geschlossenen Linienzug definiert, in welchen ein Kreis einschreibbar ist, dessen Durchmesser mindestens etwa das Doppelte bis das Dreifache des Durchmessers des herzustellenden Granulats (9) beträgt und dass sich der Führungskanal (431) in Richtung auf den hohlkegelförmigen Teil (42) zu verjüngt, wobei die lichte Weite (d) an seiner engsten Stelle kleiner ist als die lichte Weite (D) des hohlkegelförmigen Teils (42) an dessen weitester Stelle.

2. Vorrichtung nach Anspruch 1, dadurch gekennzeichnet, dass der Führungskanal (431) mit in Erzeugendenrichtung laufenden offenen Führungsnuten (432) versehen ist.

3. Vorrichtung nach Anspruch 2, dadurch gekennzeichnet, dass die Führungsnuten (432) im wesentlichen gleichmässig über den Umfang des Kanals (431) verteilt sind.

4. Vorrichtung nach Anspruch 1, dadurch gekennzeichnet, dass sich der Führungskanal (431) venturi-artig von aussen nach innen verengt und dann wieder erweitert.

5. Vorrichtung nach einem der Ansprüche 2 bis 4, dadurch gekennzeichnet, dass der Ummantelungseinrichtung eine Führungsscheibe (3) mit längs deren Umfang verteilten Führungslöchern für die Verstärkungsfasern bzw. -stränge vorgeordnet ist.

6. Vorrichtung nach Anspruch 5, dadurch gekennzeichnet, dass der Durchmesser der Führungsscheibe (3) grösser ist als die Eintrittsweite des Führungskanals (431).

## Claims

1. An apparatus for producing a fibre-reinforced plastics granulate by the Langglas process, the said apparatus comprising a sheating or coating device (4) for embedding the reinforcing fibres (1) in a plastics melt, and for combining the fibres to form a single strand (6), the sheating device (4) having an essentially hollow conical part (42), through the inner space (423) of which the reinforcing fibres (1) pass during their embedding in the melt, and the wall of which is provided with inlet apertures (424-426) for the melt ; and means (8) for breaking up the plastics-sheathed strand into a granulate (9), and also means (7) for conveying the strand to the breaking-up devices, characterised in that as the guide device (43) for the reinforcing fibres (1) there is provided a coaxial guide channel (431) having an inner profile and being positioned in front of the wider face of the hollow conical part (42), the guide channel being so designed that any cross section drawn perpendicularly to its axis defines a single continuous, self-contained line in which a circle is inscribable, the diameter of which is at least approximately twice to three times the diameter of the granulate (9) to be produced, and that the guide channel (431) tapers in the direction of the hollow conical part (42), the inside diameter (d) at the narrowest point of the guide channel (431) being smaller than the inside diameter (D) of the hollow conical part (42) at its widest point.

2. An apparatus according to Claim 1, characterised in that the guide channel (431) is provided with open guide grooves (432) running in a generatrix direction.

3. An apparatus according to Claim 2, characterised in that the guide grooves (432) are distributed essentially uniformly over the periphery of the channel (431).

4. An apparatus according to Claim 1, characterised in that the guide channel (431) narrows in a Venturi-like manner from the outside to the inside, and then opens out.

5. An apparatus according to any one of Claims 2 to 4, characterised in that in front of the sheathing device there is situated a guide disk (3) having, distributed along its periphery, guide holes for the reinforcing fibres or strands.

6. An apparatus according to Claim 5, characterised in that the diameter of the guide disk (3) is greater than the inlet width of the guide channel (431).

## Revendications

1. Dispositif pour la fabrication de granulés de matière plastique, renforcés de fibres de verre par le procédé de verre continu, avec une installation d'enrobage (4) pour noyer des fibres e renforcement (1) dans une matière synthétique fondue et pour réunir les fibres en un seul brin (6), l'installation d'enrobage (4) présentant une partie principalement en forme de cône creux (42), dans l'espace interne (423) de laquelle passent des fibres de renforcement (1) pendant l'enrobage dans le produit fondu et dont la paroi est pourvue d'ouvertures d'amenée (424-426) pour le produit fondu, et avec des moyens (8) pour réduire les brins enrobés de matière synthétique en granulés (9) ainsi qu'avec des moyens (7) pour amener le brin aux moyens de réduction, caractérisé en ce que le moyen de guidage (43) pour les fibres de renforcement (1), est un canal de guidage coaxial (431) qui présente un profil interne, qui est disposé devant la partie en forme de cône (42), et qui est conformé de façon que chaque coupe transversale perpendiculaire à son axe définisse un seul contour polygonal fermé sur lui-même dans lequel peut être inscrit un cercle dont le diamètre est égal au moins au double jusqu'au triple du diamètre du granulé à fabriquer (9) et en ce que le canal de guidage (431) se rétrécit en direction de la partie (42) en forme de cône creux, le diamètre interne (d) à son point le plus endroit étant plus petite que le diamètre interne (D) de la partie en forme de cône creux (42) à son endroit le plus large.

2. Dispositif selon la revendication 1, caractérisé en ce que le canal de guidage (431) est pourvu de rainures de guidage (432) ouvertes s'étendant dans la direction de sa génératrice.

3. Dispositif selon la revendication 2, caractérisé en ce que les rainures de guidage (432) sont réparties principalement régulièrement sur le pourtour du canal (431).

4. Dispositif selon la revendication 1, caractérisé en ce que le canal de guidage (431) se rétrécit, à la façon d'un venturi, puis s'élargit de nouveau de l'extérieur vers l'intérieur.

5. Dispositif selon l'une quelconque des revendications 2 à 4, caractérisé en ce qu'avant l'installation d'enrobage est prévu un disque perforé (3) avec des orifices de guidage répartis sur son pourtour pour les fibres ou brins de fibres de renforcement.

6. Dispositif selon la revendication 5, caractérisé en ce que le diamètre du disque de guidage (3) est plus grand que le diamètre d'entrée du canal de guidage (431).

**Fig. 1**

Fig. 2

0 035 974

**Fig.3**

411

43

411

432

431

411

411

431

432

411

411

411

**Fig.4**

413

42

425

424

424

41

424

425

**Fig.5**

1

1

1

9